# EUROPÄISCHE PATENTSCHRIFT

(11) **EP 4 150 725 B1**
(45) Veröffentlichungstag und Bekanntmachung des Hinweises auf die Patenterteilung: **13.08.2025**
(21) Anmeldenummer: 21726044.7
(22) Anmeldetag: 03.05.2021
(51) Int. Cl.: H02G 3/08, H02G 3/10, H02G 3/22, H02G 3/16, H01R 43/28

(54) **ANBAUGEHÄUSE FÜR HOCHLEISTUNGSSTECKVERBINDER**
ATTACHMENT HOUSING FOR HIGH-PERFORMANCE PLUG CONNECTOR
BOÎTIER DE FIXATION POUR CONNECTEUR MÂLE HAUTE PERFORMANCE

(30) Priorität: 12.05.2020 CN 202010396993
(43) Veröffentlichungstag der Anmeldung: 22.03.2023
(73) Patentinhaber: HARTING Electric Stiftung & Co. KG, 32339 Espelkamp (DE)
(72) Erfinder: HELLIGE, Denny, 32339 Espelkamp (DE); BÖHMANN, Frank, 32339 Espelkamp (DE); GERSTL, Walter, 1230 Wien (AT); WEN, Shao Wei, Zhuhai Guangdong, Zhuhai City, 519085 (CN)
(74) Vertreter: Eisenführ Speiser
(86) Internationale Anmeldenummer: PCT/DE2021/100401
(87) Internationale Veröffentlichungsnummer: WO 2021/228320

(56) Entgegenhaltungen:
- EP-A2- 2 845 277
- EP-B1- 2 845 277

## Beschreibung

Die Erfindung geht aus von einem Anbaugehäuse für Hochleistungssteckverbinder nach der Gattung des unabhängigen Anspruchs 1.

Derartige Anbaugehäuse für Hochleistungssteckverbinder werden insbesondere benötigt, um elektrische Leitungen zwischen schienengebundenen Fahrzeugelementen herzustellen.

### Stand der Technik

Der Stand der Technik gibt es verschiedene Anbaugehäuse für Hochleistungssteckverbinder. Üblicherweise sind schwere Trägerstrukturen für die Montage dieser Anbaugehäuse notwendig, um Schäden an dem Anbaugehäuse und/ oder der Trägerstruktur zu vermeiden, da grade im Bereich des schienengebundenen Transportwesens ein hoher Grad an Vibrationen zu erwarten ist.

Die DE 10 2019 083 940 A1 zeigt ein Durchführungsgehäuse zur Durchführung einer oder mehrerer Leitungen und/oder Kabel aus oder in einen geschlossenen Bereich, bestehend aus einem Gehäusekörper und einem dazu passenden, abnehmbaren Gehäusedeckel, wobei der Gehäusekörper eine Durchbruchsöffnung und zumindest eine Austrittsöffnung aufweist, deren Ebenen im Wesentlichen senkrecht zueinander ausgerichtet sind.

In der EP 2 845 277 A2 wird ein Durchführungsgehäuse für ein oder mehrere Kabel offenbart, aufweisend ein Gehäuseunterteil und ein Gehäuseoberteil, welches bereits konfektionierte Kabel aufnimmt und mit Zugentlastungen für das Kabel versehen ist.

Die aus dem Stand der Technik bekannten Trägerstrukturen müssen eine gewisse Wandstärke bzw. Masse aufweisen, um die Durchführungsgehäuse zuverlässig und langfristig tragen zu können und eine adäquate Schirmübertragungsvorrichtung, bzw. Schirmanbindungsmöglichkeiten zur verbesserten elektromagnetischen Verträglichkeit (EMV) bereitstellen zu können. Da es sich bei den Trägerstrukturen insbesondere um Geräte- oder Wagonwände handeln kann, werden die die notwendige massive Bauweise hohe Kosten verursacht.

### Aufgabenstellung

Die Aufgabe der Erfindung besteht darin, ein Anbaugehäuse für Hochleistungssteckverbinder anzubieten, welches die Möglichkeit anbietet, leichtere Trägerstrukturen einzusetzen. Dadurch können die die Anbaugehäuse verwendenden Geräte, Wagons von Schienenfahrzeugen oder dergleichen leichter und insbesondere kostengünstiger gebaut werden. Durch den nunmehr möglichen Leichtbau kann insbesondere im Schienenverkehr Energie eingespart werden.

Die Aufgabe wird durch den Gegenstand der unabhängigen Ansprüche gelöst.

Vorteilhafte Ausgestaltungen der Erfindung sind in den Unteransprüchen und der folgenden Beschreibung angegeben.

Eine erfindungsgemäße Ausführungsform des Anbaugehäuses weist zum Anschluss von zumindest einem Hochleistungssteckverbinder zumindest zwei Gehäuseelemente auf. Dabei wird zumindest ein Gehäuseelement an eine Trägerstruktur angebracht und für die Aufnahme zumindest eines elektrisch leitenden Kabels eingerichtet. Das Gehäuseelement und die Trägerstruktur weisen jeweils zumindest eine korrespondierende Auslassung auf, welche die Durchführung zumindest eines elektrisch leitenden Kabels ermöglicht, wobei das Anbaugehäuse weiterhin zumindest einen Gegendruckrahmen aufweist. Der Gegendruckrahmen ist auf der dem Anbaugehäuse gegenüberliegenden Seite der Trägerstruktur angeordnet und ist mit dem Anbaugehäuse verbunden. Darüber hinaus sieht zumindest ein Sortierelement zur Sortierung von Kabeln vor, wobei das Sortierelement an dem Gehäuseelement des Anbaugehäuses angebracht ist.

Als Hochleistungssteckverbinder ist insbesondere ein elektrischer Steckverbinder gemeint, welcher zumindest teilweise aus Metall besteht und für hohe Stromstärken und/ oder Spannungen ausgelegt ist, also z.B. Stromstärken über 50 Ampere, insbesondere größer als 100 Ampere, bevorzugt Stromstärken größer als 250 Ampere, insbesondere Stromstärken größer 500 Ampere. Alternativ oder ergänzend können Spannungen über 60 V, insbesondere über 220 V, beispielsweise über 600 V also auch Spannungen über 1000 V über einen solchen Steckverbinder übertragen werden. Zur Schutzerdung kann der Steckverbinder zumindest einen PE ("Protection Earth") -Kontakt beispielsweise in Form einer PE-Schraube aufweisen.

Ein mit einem Gegendruckrahmen ausgerüstetes Anbaugehäuse kann auch bei baulich erleichterter Trägerstruktur eine ausreichende Sicherheit gewährleisten, um das Anbaugehäuse und die damit verbundene Trägerstruktur ausreichend vor Schäden durch Vibration und Belastung "auf Zug" zu schützen. Auf diese Weise kann insbesondere ein schienengebundenes Transportfahrzeug (im Folgenden auch als Schienenfahrzeug bezeichnet), speziell ein

Personenbeförderungswaggon, mit einer verringerten Außenwandung ausgeführt werden. Somit wird Material und Gewicht eingespart und die Betriebssicherheit dennoch ausreichend gewährleistet. Durch den Gegendruckrahmen wird die benötigte Kraft zur sicheren Verbindung des Anbaugehäuses mit der Trägerstruktur auf eine größere Fläche verteilt. Würden zur Verbindung von Anbaugehäuse und Trägerstruktur beispielsweise Gewindebohrungen eingesetzt, können auftretende Vibrationen zu einer Lockerung der Schraubverbindung führen. Schlimmstenfalls kann eine Schraubverbindung bei zu großer Zugkraft aus der Trägerstruktur reißen. Durch die Verteilung der auftretenden Kräfte wird die punktuelle Belastung vorteilhaft verringert.

Das Sortierelement weist beispielsweise eine Gitterstruktur auf, welches verschiedene Kabel gemeinsam durch die Auslassung führt, sodass die verschiedenen Kabel an einer ähnlichen Position im Anbaugehäuse mit einem Steckverbinder, einem Kontaktelement oder ähnlichem verbunden werden können. Das Sortierelement kann beispielsweise aus Kunststoff bestehen und in einem Spritzgussprozess gefertigt sein. Die die Gitterstruktur bildenden Stäbe können händisch herausbrechbar sein und so beispielsweise Kabeln mit größerem Durchmesser bzw. Querschnitt Platz bieten. Alternativ ist die Kabelhalterung zusätzlich zu einer die Auslassung in Sektoren aufteilenden, gitterähnlichen Form mit zumindest einer Klammerstruktur versehen. Diese Klammerstruktur kann Kabelabstände erzwingen. Weiterhin lässt eine derartige Klammerstruktur, vergleichbar der Kabelhalterung, bei metallischer Ausführung eine Schirmübertragung von angeschlossenen Kabeln zur Masseanbindung des Anbaugehäuses und/ oder des Gegenhalterahmens zu.

In einer weiterführenden Ausführungsform ist das Sortierelement in einem Bereich zwischen dem Gehäuseelement des Anbaugehäuses und dem Gegendruckrahmen angeordnet.

Eine Weiterentwicklung der erfindungsgemäßen Ausführungsform sieht ein Anbaugehäuse vor, dessen Gegendruckrahmen zumindest einteilig ausgeführt ist. Ein einteiliger Gegendruckrahmen vereinfacht die Montage des Gegendruckrahmens an der Trägerstruktur, bzw. an dem dazugehörigen Anbaugehäuse. Als Nachrüstlösung kann es sinnvoll sein, einen Gegendruckrahmen zumindest zweiteilig auszuführen. Dazu werden beispielsweise zwei grundsätzlich L-förmige Platten eingesetzt, welche um ein bereits verlegtes elektrisches Kabel herum an eine Trägerstruktur angebracht werden. Idealerweise lassen sich diese Platten mit Ausnehmung und Formen ineinander verzahnen, verzapfen oder vergleichbar miteinander eingreifen. Somit wird ein mehrteiliger Gegendruckrahmen ausgeführt, welcher eine vergleichbar effektive flächige Verteilung der Kräfte aufbringen kann, wie ein einteilig ausgeführter Gegendruckrahmen.

Eine vorteilhafte Ausführungsform sieht vor, dass der Gegendruckrahmen zumindest eine Auslassung aufweist, welche mit der Auslassung der Trägerstruktur grundsätzlich korreliert. Somit kann eine die Auslassung umgebende Verteilung der auftretenden Zugkräfte erreicht werden. Zeitgleich wird der Randbereich der Auslassung umlaufend unterstützt und eine Materialermüdung durch im Betrieb auftretende Vibrationen werden gehemmt/ verhindert.

In einer bevorzugten Ausführungsform weist der Gegendruckrahmen zumindest zwei Durchgangsöffnungen auf, welche zur Verbindung des zumindest einen Gehäuseelements mit dem Gegendruckrahmen ausgebildet sind. Insbesondere wird ein Gegendruckrahmen mit drei, vier, fünf oder sechs Durchgangsöffnungen bevorzugt. Diese Durchgangsöffnungen können angeformt sein, beispielsweise bei einem urformenden Herstellungsverfahren. Alternativ sind die Durchgangsöffnungen in einem spanenden Verfahren abgetragen. Das Anbaugehäuse wird anschließend mit Verbindungselementen an korrespondierenden Öffnungen versehen. Die Verbindungselemente werden durch die Trägerstruktur geführt. Anschließend wird in einer Ausführungsform der Gegendruckrahmen an die Trägerstruktur herangeführt und mit den Verbindungselementen an der Trägerstruktur befestigt. Beispielhaft werden Unterlegscheiben und Muttern eingesetzt, um den Gegendruckrahmen mit den Verbindungselementen an der Trägerstruktur zu befestigen. Die Verbindungselemente sind beispielhaft in Form von Gewindestangen, Gewindebolzen, Steckbolzen, oder Schrauben ausgeführt. Andere Formen der Verbindungselemente sind ebenfalls denkbar. In besonders vorteilhafter Weise wird der Gegendruckrahmen mit Befestigungsformen versehen. Als Befestigungsformen sind beispielsweise Gewinde, Nuten, Bajonettverschluss-Schlitze, oder vergleichbare Formen zu verstehen. Weiterhin kann statt einem eingearbeiteten Gewinde auch eine Gewindehülse eingesetzt werden.

In einer sinnvollen Ausführungsform weist der Gegendruckrahmen zumindest zwei Fixieröffnungen zur Befestigung von zumindest einer Kabelhalterung auf. Vorteilhafterweise weist der Gegendruckrahmen je Seite eine, zwei oder drei Fixieröffnungen auf. Als Fixieröffnung wird bevorzugt ein Sackloch vorgeschlagen. Alternativ kann eine Fixieröffnung auch als Durchgangsloch ausgeführt sein. Insbesondere wird vorgeschlagen, die Fixieröffnung mit einem Innengewinde zu versehen. Ein Gegendruckrahmen mit beschriebenen Fixieröffnungen nimmt erfindungsgemäß zumindest eine Kabelhalterung auf. Je nach Anzahl der verwendeten Kabel sind zwei, drei oder vier Kabelhalterungen sinnvoll. Die Kabelhalterung sorgt einerseits dafür, dass verschiedene Kabel ausreichend Abstand zueinander einnehmen und diesen Abstand während des Betriebs halten können. Weiterhin ist die Kabelhalterung vorteilhafterweise aus einem elektrisch leitfähigen Werkstoff, insbesondere einem Metall ausführt. Die Kabelhalterung wird mittels in die Fixieröffnungen eingefügte Befestigungselemente, beispielsweise Schrauben, an dem Gegendruckrahmen befestigt. Diese Ausführungsform ermöglicht die Übertragung eines elektromagnetischen Schirms von zumindest einem angeschlossenen Kabel auf das Anbaugehäuse, die Trägerstruktur und/ oder den Gegendruckrahmen. Das Schirmelement des Kabels kann mit einer Kabelschelle an der Kabelhalterung befestigt werden. Alternativ wird eine Kabelschelle als Kabelhalterung eingesetzt. Somit wird die Kabelschelle direkt durch die Fixeröffnung mit dem Gegendruckrahmen verbunden. Die Kabelschelle wird folglich aus einem elektrisch leitfähigem Material ausgeführt. In einer äquivalenten Ausführungsform ist der Gegendruckrahmen anstelle zumindest einer Fixieröffnung mit einer Fixierform ausgeführt. Als Fixierform wird ein Gewindestift vorgeschlagen. Auf diesem Gewindestift kann die Kabelhalterung aufgesetzt werden und dort beispielsweise mit einer Mutter fixiert werden.

Eine alternative Ausführungsform sieht vor, dass die Fixieröffnungen zumindest eine Befestigungsform aufweisen. Als Befestigungsform ist bevorzugt ein Gewinde, sinnvollerweise ein Innengewinde zu verstehen. Auch eine längs verlaufende Nut mit anschließender Quer verlaufender Nut ist denkbar. Auf diese Weise kann ein Schnellverschluss, vergleichbar einem Bajonettverschluss eingesetzt werden. Darüber hinaus kann die Fixieröffnung eine innenliegende, quer zur Längsachse der Fixieröffnung verlaufende Nut, in ihrem Inneren aufweisen. Diese Nut kann beispielsweise Rastelemente, wie eine Rastnase, einen Rasthaken oder vergleichbares aufnehmen. Eine erfindungsgemäße Kabelhalterung kann somit einfach verrastend in den Gegendruckrahmen eingebracht werden.

Schließlich fixiert in einer Ausführungsform der Gegendruckrahmen das Sortierelement am Gehäuseelement des Anbaugehäuses.

### Ausführungsbeispiel

Ein Ausführungsbeispiel der Erfindung ist in den Zeichnungen dargestellt und wird im Folgenden näher erläutert. Es zeigen:
- Fig. 1: eine perspektivische Darstellung eines erfindungsgemäßen Anbaugehäuses mit rückseitiger Ansicht auf einen Gegendruckrahmen mit Kabelhalterungen;
- Fig. 2: eine perspektivische Darstellung vergleichbar der Fig. 1 mit direktem Blick auf ein Sortierelement;
- Fig. 3: eine perspektivische Darstellung vergleichbar der Fig. 1 mit einer alternativen Kabelbelegung;
- Fig. 4: eine perspektivische Darstellung vergleichbar der Fig. 1 mit alternativen Kabelhalterungen und alternativem Sortierelement.

Die Figuren enthalten teilweise vereinfachte, schematische Darstellungen. Zum Teil werden für gleiche, aber gegebenenfalls nicht identische Elemente identische Bezugszeichen verwendet. Verschiedene Ansichten gleicher Elemente könnten unterschiedlich skaliert sein.

Richtungsangaben wie beispielsweise "links", "rechts", "oben" und "unten" sind mit Bezug auf die jeweilige Figur zu verstehen und können in den einzelnen Darstellungen gegenüber dem dargestellten Objekt variieren. Hochgestellte Buchstaben und Ziffern sowie Tiefgestellte Buchstaben und Ziffern nach einem Bezugszeichen dienen der Orientierung und sollen grundsätzlich der vereinfachten Übersicht dienen.

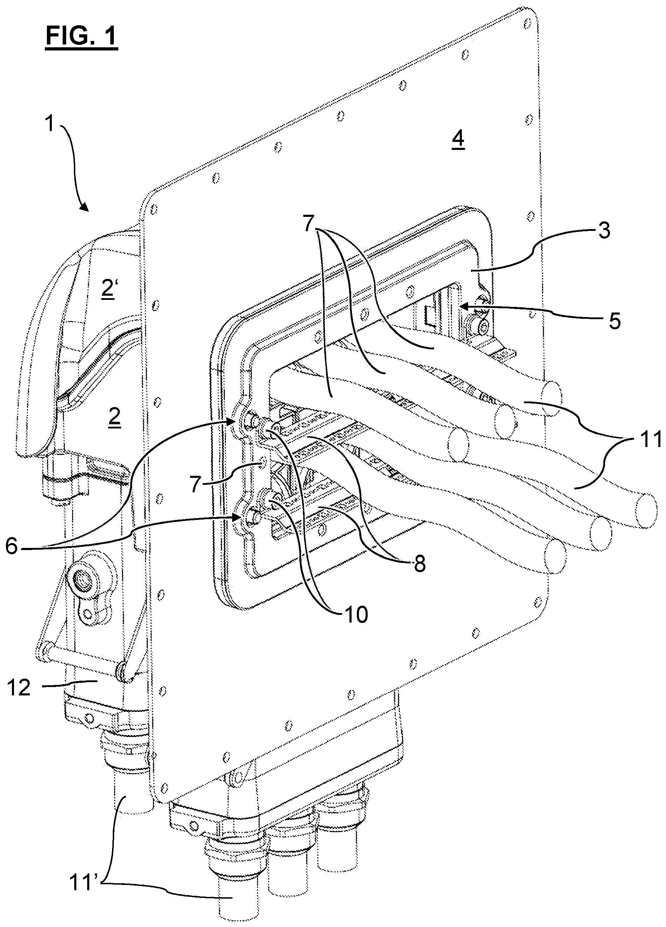

Die Figur 1 zeigt ein erfindungsgemäßes Anbaugehäuse 1, aufweisend zwei Gehäuseelemente 2 und 2'. Das Gehäuseelement 2' ist an dem Gehäuseelement 2 lösbar befestigt. Das Gehäuseelement 2 ist an einer Trägerstruktur 4 fixiert. Ein erfindungsgemäßer Gegendruckrahmen 3 ermöglicht eine geringe Dicke der Trägerstruktur 4, indem der Gegendruckrahmen 3 die notwendigen Kräfte zur Befestigung der Gehäuseelemente 2 und 2' auf die gesamte Fläche des Gegendruckrahmen 3 verteilt. Das Gehäuseelement 2 wird also erfindungsgemäß sowohl von der Trägerstruktur 4, als auch von dem Gegendruckrahmen 3 in Position gehalten. Darüber hinaus werden Belastungen durch Vibration, die während des Betriebs auftreten, von dem Gegendruckrahmen 3 flächig auf den darunterliegenden Teil der Trägerstruktur 4 verteilt. Das Gehäuseelement 2, der Gegendruckrahmen 3 sowie die Trägerstruktur 4 weisen eine Auslassung 5 auf. Diese Auslassung 5 ermöglicht die Durchführung verschiedener, je nach Bedarfsfall anpassbarer Kabel 11. Der Gegendruckrahmen 3 weist eine grundsätzlich rechteckige Form auf, kann allerdings auch in anderen geometrischen Formen ausgeführt sein. In der dargestellten Ausführungsform des Gegendruckrahmens 3 weist dieser je Schmalseite zwei Durchgangsöffnungen 6 auf. Diese Durchgangsöffnungen 6 sind mit einer Befestigungsform, beispielsweise einem Gewinde versehen. Alternativ können die Durchgangsöffnungen 6 mit Nuten oder Bahnen für Bajonettverschlüsse versehen sein. Auch Hilfsmittel können in die Durchgangsöffnungen 6 eingesetzt werden. Als Hilfsmittel sind besonders Gewindehülsen, Gewindeeinsätze oder andersartige Einsätze mit Befestigungsform zu verstehen. Als Alternative zu den Durchgangsöffnungen 6 können Sacklöcher eingesetzt werden, deren Öffnung zur Trägerstruktur 4 gerichtet sind. Der dargestellte Gegenhalterahmen 3 weist weiterhin je Seite drei Fixieröffnungen 7 auf. Diese Fixieröffnungen 7 sind ebenfalls mit Befestigungsformen versehen. Auch die Fixieröffnungen 7 können alternativ mit Einsätzen, insbesondere mit Gewindeeinsätzen oder Gewindehülsen bestückt werden. Die Fixieröffnungen 7 können als Durchgangsöffnung ausgeführt sein. Vorzugsweise sind die Fixieröffnungen 7 als Sackloch ausgeführt, deren Öffnung von der Trägerstruktur 4 abgewandt ist. Die Fixieröffnungen 7 eignen sich dazu, Kabelhalterungen 8 an den Gegenhalterahmen 3 zu befestigen. In der dargestellten Ausführungsform werden dazu Schrauben mit Innensechskant als Befestigungselement 10 eingesetzt. Dem Fachmann ergeben sich schnell alternative Befestigungselemente. Die Kabelhalterungen 8 weisen Öffnungen entlang beider Langseiten auf. Diese können zur Fixierung der eingesetzten Kabel 11 eingesetzt werden. Dazu werden beispielsweise Kabelbinder oder Kabelschellen eingesetzt.

Weiterhin können Schirmelemente der Kabel 11 an die Kabelhalterungen 8 angebracht werden. Durch eine metallische Ausführung der Kabelhalterungen 8 kann eine Schirmwirkung erreicht werden.

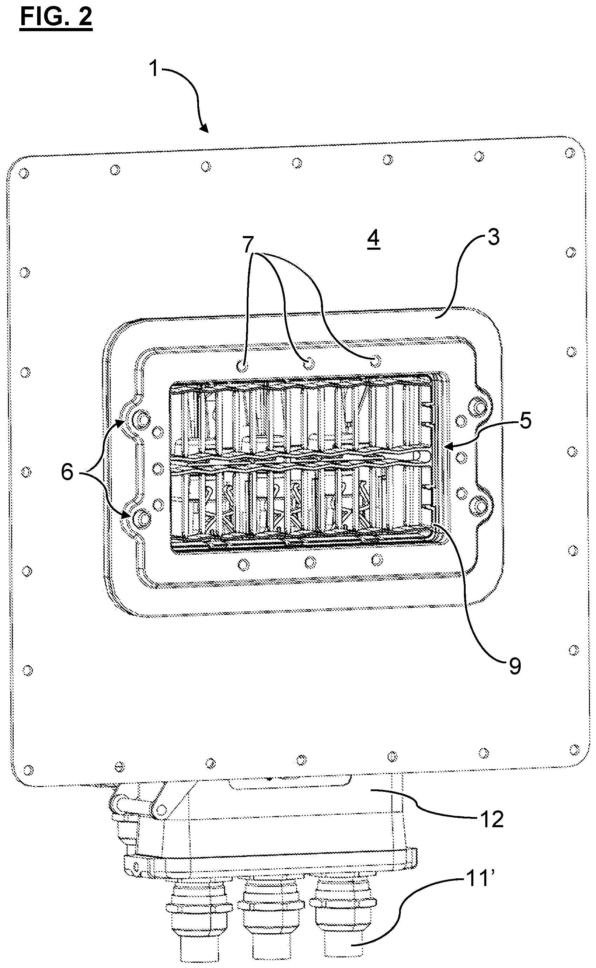

Die Figur 2 legt den Fokus auf einen erfindungsgemäßen Gegenhalterahmen 3. Da, anders als in Figur 1, keine Kabel durch die Ausnehmung 5 geführt dargestellt sind, lässt sich ein Sortierelement 9 gut erkennen. Dieses ist in dem Gehäuseelement 2 mit Rastmitteln befestigt und wird von dem Gegendruckrahmen 3 weiter in seiner Position fixiert. Als metallische Gitterstruktur ausgeführt lässt sich das Sortierelement 9 mit schirmender Wirkung einsetzen.

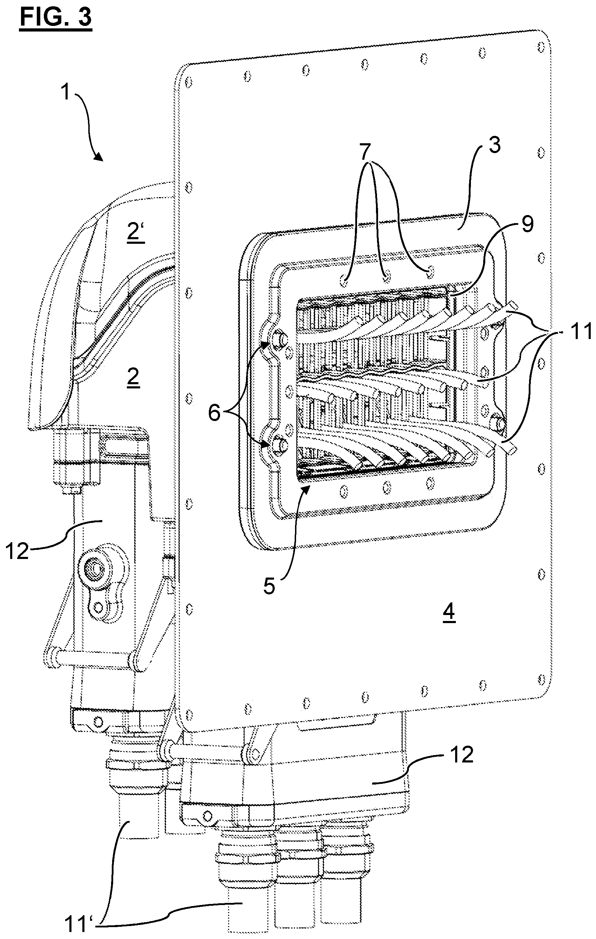

In der Figur 3 wird ein in Figur 2 verdeutlichtes Sortierelement 9 in einem möglichen Einsatz mit verschiedenen Kabeln 11 variierenden Aderquerschnitts dargestellt. Die in den Figuren 2 und 3 dargestellte Ausführungsform des Sortierelements 9 bietet sich besonders bei eingesetzten Kabeln 11 mit einem Aderquerschnitt von 0,5 mm² bis etwa 20 mm² an.

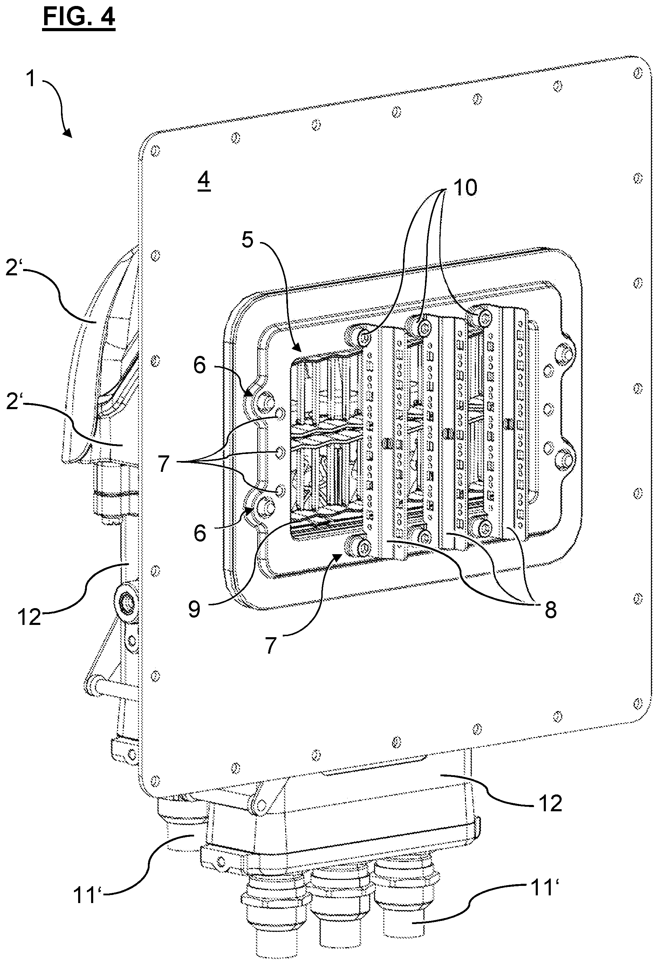

Alternative Gestaltungsmöglichkeiten sowohl der Kabelhalterungen 8 als auch des Sortierelements 9 werden in der Figur 4 offenbart. In dieser ist das Sortierelement 9 als Gitter mit an den Gittersprossen befindlichen Klemmelementen ausgeführt. Diese Ausführung eignet sich besonders bei einem Einsatz von Kabeln 11 mit einem Aderquerschnitt größergleich 20 mm² wie in Figur 1 angedeutet. Die dargestellten Kabelhalterungen 8 verlaufen in dieser Ausführungsform vertikal. Dadurch kann eine andere Sortierung, bzw. Aufteilung der eingesetzten Kabel erfolgen. Auch ermöglicht ein derart gestalteter Gegendruckrahmen 3 eine vielseitige Anwendbarkeit des Anbaugehäuses 1. Das Anbaugehäuse 1 kann horizontal verbaut ebenso zuverlässig eingesetzt werden, wie bei einem vertikalen Einbau. Das Sortierelement 9 und die Kabelhalterungen 8 können diese vielseitige Anwendbarkeit sinnvoll unterstützen.

Auch wenn in den Figuren verschiedene Aspekte oder Merkmale der Erfindung jeweils in Kombination gezeigt sind, ist für den Fachmann - soweit nicht anders angegeben - ersichtlich, dass die dargestellten und diskutierten Kombinationen nicht die einzig möglichen sind. Insbesondere können einander entsprechende Einheiten oder Merkmalskomplexe aus unterschiedlichen Ausführungsbeispielen miteinander ausgetauscht werden.

### Bezugszeichenliste

- 1: Anbaugehäuse
- 2, 2': Gehäuseelement
- 3: Gegendruckrahmen
- 4: Trägerstruktur
- 5: Auslassung
- 6: Durchgangsöffnung
- 7: Fixieröffnung
- 8: Kabelhalterung
- 9: Sortierelement
- 10: Befestigungselement
- 11, 11': Kabel
- 12: Hochleistungssteckverbinder

## Patentansprüche

1. Anbaugehäuse (1) zum Anschluss von zumindest einem Hochleistungssteckverbinder (12), wobei das Anbaugehäuse (1) zumindest zwei Gehäuseelemente (2, 2') aufweist, wobei zumindest ein Gehäuseelement (2) an eine Trägerstruktur (4) angebracht wird und für die Aufnahme zumindest eines elektrisch leitenden Kabels (11) eingerichtet ist und wobei das Gehäuseelement (2) und die Trägerstruktur (4) jeweils zumindest eine korrespondierende Auslassung (5) aufweisen, welche zumindest die Durchführung eines elektrisch leitenden Kabels (11) ermöglichen,
wobei das Anbaugehäuse (1) weiterhin zumindest einen Gegendruckrahmen (3) aufweist, welcher auf der dem Anbaugehäuse (1) gegenüberliegenden Seite der Trägerstruktur (4) angeordnet ist und mit dem Anbaugehäuse (1) verbunden ist, **dadurch gekennzeichnet, dass** zumindest ein Sortierelement (9) zur Sortierung und/oder Befestigung von Kabeln (11) an dem Gehäuseelement (2) des Anbaugehäuses (1) angebracht ist und das Sortierelement (9) in einem Bereich zwischen dem Gehäuseelement (2) des Anbaugehäuses (1) und dem Gegendruckrahmen (3) angeordnet ist.

2. Anbaugehäuse (1) nach Anspruch 1
**dadurch gekennzeichnet, dass**
der Gegendruckrahmen (3) zumindest einteilig ausgeführt ist.

3. Anbaugehäuse (1) nach einem der vorstehenden Ansprüche
**dadurch gekennzeichnet, dass**
der Gegendruckrahmen (3) zumindest eine Auslassung (5) aufweist, welche mit der Auslassung (5) der Trägerstruktur (4) grundsätzlich korreliert.

4. Anbaugehäuse (1) nach einem der vorstehenden Ansprüche
**dadurch gekennzeichnet, dass**
der Gegendruckrahmen (3) zumindest zwei Durchgangsöffnungen (6) aufweist, welche zur Verbindung des zumindest einen Gehäuseelements (2) mit dem Gegendruckrahmen (3) ausgebildet sind.

5. Anbaugehäuse (1) nach einem der vorstehenden Ansprüche
**dadurch gekennzeichnet, dass**
der Gegendruckrahmen (3) zumindest zwei Fixieröffnungen (7) zur Befestigung von zumindest einer Kabelhalterung (8) aufweist.

6. Anbaugehäuse (1) nach einem der vorstehenden Ansprüche
**dadurch gekennzeichnet, dass**
die Fixieröffnungen (7) zumindest eine Befestigungsform aufweisen.

7. Anbaugehäuse (1) nach einem der vorstehenden Ansprüche
**dadurch gekennzeichnet, dass**
der Gegendruckrahmen (3) das Sortierelement (9) am Gehäuseelement (2) des Anbaugehäuses (1) fixiert.

## Claims

1. An attachment housing (1) for connecting at least one high-performance plug connector (12), wherein the attachment housing (1) comprises at least two housing elements (2, 2'), wherein at least one housing element (2) is mounted on a support structure (4) and is configured to receive at least one electrically conductive cable (11), and wherein the housing element (2) and the support structure (4) each have at least one corresponding aperture (5), which at least allows an electrically conductive cable (11) to be passed through,
wherein the attachment housing (1) further comprises at least one counter-pressure frame (3), which is arranged on the side of the support structure (4) opposite the attachment housing (1) and is connected to the attachment housing (1)
**characterized in that**
at least one sorting element (9) for sorting and/or fastening cables (11) is attached to the housing element (2) of the attachment housing (1) und
the sorting element (9) is arranged in a region between the housing element (2) of the attachment housing (1) and the counter-pressure frame (3).

2. The attachment housing (1) according to claim 1,
**characterized in that**
the counter-pressure frame (3) is made at least in one piece.

3. The attachment housing (1) according to any one of the preceding claims,
**characterized in that**
the counter-pressure frame (3) has at least one aperture (5), which correlates in principle with the aperture (5) of the support structure (4).

4. The attachment housing (1) according to any one of the preceding claims,
**characterized in that**
the counter-pressure frame (3) has at least two through-openings (6), which are formed for connecting the at least one housing element (2) to the counter-pressure frame (3).

5. The attachment housing (1) according to any one of the preceding claims,
**characterized in that**
the counter-pressure frame (3) has at least two fixing openings (7) for fastening at least one cable holder (8).

6. The attachment housing (1) according to any one of the preceding claims,
**characterized in that**
the fixing openings (7) have at least one shaped fastening portion.

7. The attachment housing (1) according to any one of the preceding claims,
**characterized in that**
the counter-pressure frame (3) fixes the sorting element (9) to the housing element (2) of the attachment housing (1).

## Revendications

1. Boîtier rapporté (1) pour le raccordement d'au moins un connecteur mâle haute performance (12), dans lequel le boîtier rapporté (1) présente au moins deux éléments de boîtier (2, 2'), dans lequel au moins un élément de boîtier (2) est installé sur une structure de support (4) et est mis au point pour recevoir au moins un câble électriquement conducteur (11) et dans lequel l'élément de boîtier (2) et la structure de support (4) présentent chacun au moins un évidement correspondant (5), qui permettent au moins le passage d'un câble électriquement conducteur (11), dans lequel le boîtier rapporté (1) présente par ailleurs au moins un cadre de contre-pression (3) qui est disposé sur le côté opposé au boîtier rapporté (1) de la structure de support (4) et est relié au boîtier rapporté (1), **caractérisé en ce qu'**au moins un élément de tri (9) pour le tri et/ou la fixation de câbles (11) est installé sur l'élément de boîtier (2) du boîtier rapporté (1) et l'élément de tri (9) est disposé dans une zone entre l'élément de boîtier (2) du boîtier rapporté (1) et le cadre de contre-pression (3).

2. Boîtier rapporté (1) selon la revendication 1,
**caractérisé en ce que**
le cadre de contre-pression (3) est réalisé au moins en une seule pièce.

3. Boîtier rapporté (1) selon l'une quelconque des revendications précédentes,
**caractérisé en ce que**
le cadre de contre-pression (3) présente au moins un évidement (5) qui est en principe corrélé avec l'évidement (5) de la structure de support (4).

4. Boîtier rapporté (1) selon l'une quelconque des revendications précédentes,
**caractérisé en ce que**
le cadre de contre-pression (3) présente au moins deux ouvertures de passage (6) qui sont réalisées pour relier l'au moins un élément de boîtier (2) au cadre de contre-pression (3).

5. Boîtier rapporté (1) selon l'une quelconque des revendications précédentes,
**caractérisé en ce que**
le cadre de contre-pression (3) présente au moins deux ouvertures de fixation (7) pour la fixation d'au moins un porte-câble (8).

6. Boîtier rapporté (1) selon l'une quelconque des revendications précédentes,
**caractérisé en ce que**
les ouvertures de fixation (7) présentent au moins une forme de fixation.

7. Boîtier rapporté (1) selon l'une quelconque des revendications précédentes,
**caractérisé en ce que**
le cadre de contre-pression (3) fixe l'élément de tri (9) sur l'élément de boîtier (2) du boîtier rapporté (1).
